# EUROPÄISCHE PATENTSCHRIFT

(11) **EP 1 180 201 B1**
(45) Veröffentlichungstag und Bekanntmachung des Hinweises auf die Patenterteilung: **07.06.2006**
(21) Anmeldenummer: 00929396.0
(22) Anmeldetag: 20.04.2000
(51) Int. Cl.: F01N 3/08, F02D 41/02

(54) **VERFAHREN ZUR ENTSCHWEFELUNG VON EINEM IN EINEM ABGASKANAL EINER VERBRENNUNGSKRAFTMASCHINE ANGEORDNETEN NOX-SPEICHERKATALYSATOR**
METHOD FOR DESULPHURATING A NOX-STORAGE CATALYST THAT IS ARRANGED IN AN EXHAUST CHANNEL OF A COMBUSTION ENGINE
PROCEDE DE DESULFURATION D'AU MOINS UN CATALYSEUR DE STOCKAGE DE NOX DISPOSE DANS LE TUYAU D'ECHAPPEMENT D'UN MOTEUR A COMBUSTION INTERNE

(30) Priorität: 12.05.1999 DE 19921973
(43) Veröffentlichungstag der Anmeldung: 20.02.2002
(73) Patentinhaber: Volkswagen Aktiengesellschaft, 38436 Wolfsburg (DE)
(72) Erfinder: POTT, Ekkehard, D-38518 Gifhorn (DE)
(74) Vertreter: Schneider, Henry
(86) Internationale Anmeldenummer: PCT/EP2000/003582
(87) Internationale Veröffentlichungsnummer: WO 2000/070201

(56) Entgegenhaltungen:
- EP-A- 0 869 263
- DE-C- 19 747 222

## Beschreibung

Die Erfindung betrifft ein Verfahren zur Entschwefelung von wenigstens einem in einem Abgaskanal einer Verbrennungskraftmaschine angeordneten NOₓ-Speicherkatalysator mit den im Oberbegriff des Anspruchs 1 genannten Merkmalen.

Verfahren zur Entschwefelung von NOₓ-Speicherkatalysatoren sind bekannt. Dabei müssen während der Entschwefelung sogenannte Regenerationsparameter, wie eine Mindesttemperatur am NOₓ-Speicherkatalysator und ein Arbeitsmodus der Verbrennungskraftmaschine, mit λ ≤ 1 eingestellt werden.

Unter einem Arbeitsmodus der Verbrennungskraftmaschine mit λ < 1 überwiegt im Abgas eine Konzentration reduzierender Gaskomponenten, wie CO, HC oder H₂, eine Konzentration von Sauerstoff (fette Atmosphäre). Bei λ > 1 ist die Sauerstoffkonzentration dominierend (magere Atmosphäre). Während eines Betriebes der Verbrennungskraftmaschine in magerer Atmosphäre wird neben NOₓ, durch eine Verbrennung wechselnder Schwefelanteile im Kraftstoffgemisch, SO₂ gebildet. Dieses wird ebenso wie das NOₓ in magerer Atmosphäre von dem NOₓ-Speicherkatalysator absorbiert, wobei die SO₂-Absorption zur Bildung von lokalen Inhomogenitäten infolge einer Sulfatkornbildung führen kann. Dieser Prozeß führt zu einer Reduzierung einer katalytisch aktiven Oberfläche und einer Kapazität des NOₓ-Speicherkatalysators und bietet einen Angriffspunkt für korrosive Prozesse, die eine dauerhafte Schädigung des NOₓ-Speicherkatalysators nach sich ziehen können.

Es ist bekannt, einen Verschwefelungsgrad des NOₓ-Speicherkatalysators anhand einer Erfassung einer Effizienz hinsichtlich einer Reduktion von NOₓ (Konvertierungsreaktion) zu messen. So wird beispielsweise in der DE 197 47 222 C1 beschrieben, eine durch Schwefelvergiftung verminderte NOₓ-Speicherfähigkeit durch Erfassung der stromab des NOₓ-Speicherkatalysators vergleichsweise rasch ansteigenden NOₓ-Konzentration in Magerphasen festzustellen.

Erreicht der Verschwefelungsgrad einen Schwellenwert, ist ferner bekannt, die Entschwefelung durch zumindest eine temporäre Beeinflussung eines Betriebsparameters dsr Verbrennungskraftmaschine (Maßnahme) zu initiieren. Diese Maßnahmen umfassen beispielsweise eine Spätzündung, eine Nacheinspritzung vor oder während eines Verbrennungsvorgangs oder eine zylinderselektive Vertrirnrnung der Verbrennungskraftmaschine und führen somit zu einem erhöhten Kraftstoffverbrauch. Häufig werden diese Maßnahmen ergriffen, um eine Abgastemperatur vor dem NOₓ₋Speicherkatalysator zu erhöhen und nachfolgend die Mindesttemperatur an dem NOₓ₋Speicherkatalysator zu erreichen. Nachteilig bei den bekannten Verfahren ist es, daß die Entschwefelung lediglich anhand der Effizienz der Konvertierungsreaktion, also nach Erreichen des Schwellenwertes, initiiert wird und damit in der Praxis auftretende günstigere Betriebssituationen der Verbrennungskraftmaschine, bei denen der Schwellenwert noch nicht erreicht wird, aber die Temperatur des NOₓ₋Speicherkatalysators schon nahe der Mindesttemperatur liegt, ungenutzt bleiben. Dies führt zu einem erhöhten Kraftstoffverbrauch.

Der Erfindung liegt die Aufgabe zugrunde, die Entschwefelung des NOₓ₋Speicherkatalysators wesentlich dynamischer zu gestalten, das heißt neben dem Verschwefelungsgrad des Katalysators auch die Regenerationsparameter zur Beurteilung einer Entschwefelungsnotwendigkeit mit einzubeziehen.

Diese Aufgabe wird durch das Verfahren zur Entschwefelung von wenigstens einem in dem Abgaskanal einer Verbrennungskraftmaschine angeordneten NOₓ₋Speicherkatalysator mit den Merkmalen des Anspruchs 1 gelöst. Dadurch, daß die Entschwefelung neben dem Verschwefelungsgrad in Abhängigkeit eines aktuellen Lambdawertes und/oder einer aktuellen Temperatur des NOₓ-Speicherkatalysators initiiert wird, kann die Entschwefelung wesentlich effizienter, das heißt kraftstoffsparender, durchgeführt werden. Weiterhin ist vorteilhaft, daß eine Größe der von der Entschwefelung gebildeten Sulfatkömer geringer gehalten werden kann, da die Entschwefelung insgesamt häufiger stattfindet.

In einer bevorzugten Ausgestaltung des Verfahrens wird zur Beurteilung der Entschwefelungsnotwendigkeit eine Kenngröße ermittelt, die aus dem Verschwefelungsgrad, dem Lambdawert und der NOₓ-Speicherkatalysatortemperatur gebildet wird. Die Kenngröße liegt in einem Kennfeld, das über ein Verhältnis einer Last zu einer Drehzahl der Verbrennungskraftmaschine charakterisierbar ist. Dieses Kennfeld kann in einer beliebigen Anzahl von Bereichen gegliedert werden, in denen beispielsweise der Schwellenwert für die Entschwefelung mit steigender Temperatur herabgesetzt wird. Auf diese Weise kann sehr dynamisch auf gegebene Betriebssituationen hinsichtlich der initialisierung der Entschwefelung reagiert werden.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Anordnung eines Katalysatorsystems in einem Abgaskanal einer Verbrennungskraftmaschine und
- Figur 2: ein Verhältnis einer Last zu einer Drehzahl einer Verbrennungskraftmaschine.

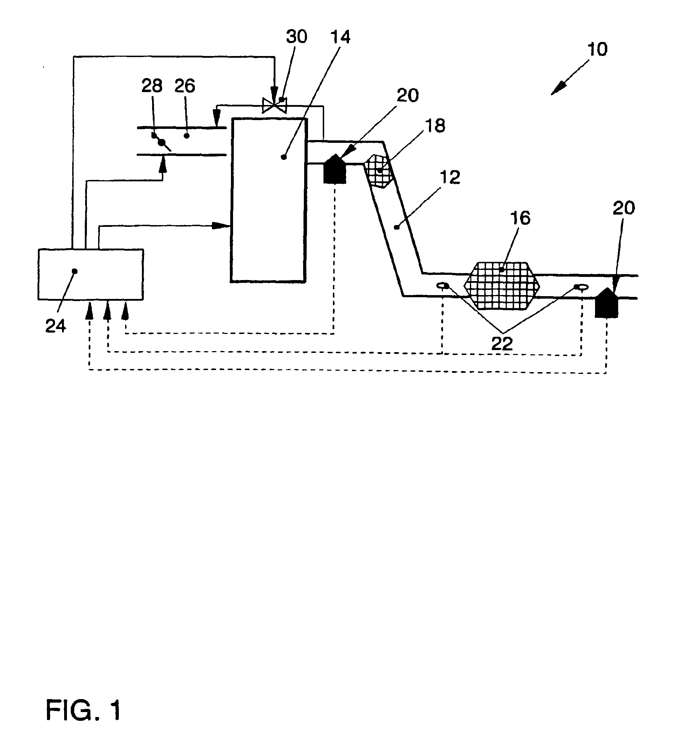

In der Figur 1 ist in schematischer Weise eine Anordnung eines Katalysatorsystems 10 in einem Abgaskanal 12 einer Verbrennungskraftmaschine 14 dargestellt. Das Katalysatorsystem 10 umfaßt einen NOₓ-Speicherkatalysator 16 und einen Vorkatalysator 18 sowie geeignete Gassensoren 20 und Temperatursensoren 22.

Ein Arbeitsmodus der Verbrennungskraftmaschine 14 kann mittels eines Motorsteuergerätes 24 geregelt werden. Wird beispielsweise ein Arbeitsmodus mit λ < 1 (fette Atmosphäre) gewünscht, so muß eine Sauerstoffkonzentration in einem Saugrohr 26 vor einer Verbrennung eines Kraftstoff-Luft-Gemisches gesenkt werden. Damit erhöhen sich die Anteile reduzierender Gaskomponenten im Abgas im Vergleich zu einem Anteil an Sauerstoff. Beispielsweise kann ein solcher Arbeitsmodus durch eine Reduzierung eines Volumenstroms angesaugter Luft mittels einer Drosselklappe 28 und durch gleichzeitige Zuführung sauerstoffarmen Abgases über ein Abgasrückflußventil 30 erfolgen.

In einem Arbeitsmodus mit λ > 1 (magere Atmosphäre) wird neben NOₓ auch SO₂ im NOₓ-Speicherkatalysator 16 absorbiert, während die geringen Anteile reduzierender Gaskomponenten fast vollständig im Vorkatalysator 18 umgesetzt werden. In Abhängigkeit von einer Kapazität und einer Desorptionstemperatur des NOₓ₋Speicherkatalysators 16 muß die Verbrennungskraftmaschine 14 zur Regeneration mit λ ≤ 1 betrieben werden. In einem solchen Arbeitsmodus wird das zuvor absorbierte NOₓ an einer katalytisch aktiven Oberfläche des NOₓ-Speicherkatalysators 16 reduziert.

Ebenfalls absorbiertes SO₂ wird in Form von Sulfat in dem NOₓ-Speicherkatalysator 16 eingelagert, wobei allerdings eine Reversibilität dieses Einlagerungsprozesses im Gegensatz zu der Einlagerung von NOₓ wesentlich höhere Temperaturen erfordert. Somit muß zur Entschwefelung eine Mindestentschwefelungstemperatur und ein Lambdawert ≤ 1 vorliegen (Regenerationsparameter).

Eine Entschwefelungsnotwendigkeit ergibt sich aus einer Effizienz für eine Konvertierungsreaktion des NOₓ-Speicherkatalysators 16 und einer aktuellen Temperatur des NOₓ-Speicherkatalysators 16 und/oder einem aktuellen Lambdawert. Die Erfassung der Effizienz kann mit Hilfe des Gassensors 20 erfolgen, der eine NOₓ₋Konzentration hinter dem NOₓ-Speicherkatalysator 16 mißt. Aufgrund von Erfahrungswerten oder über eine Messung der NOₓ-Konzentration vor dem NOₓ₋Speicherkatalysator 16 kann auf diese Weise in einfacher Weise ein Verschwefelungsgrad und damit die Effizienz bestimmt werden. Über die Temperatursensoren 22 läßt sich die aktuelle Temperatur am NOₓ-Speicherkatalysator 16 ermitteln, während der aktuelle Lambdawert wiederum über die Gassensoren 20 bestimmbar ist. Zu jedem Zeitpunkt ist damit ein Verschwefelungsgrad, eine Temperatur und ein Lambdawert gegeben, die zusammengefaßt als eine Kenngröße zur Beurteilung einer Entschwefelungsnotwendigkeit herangezogen werden.

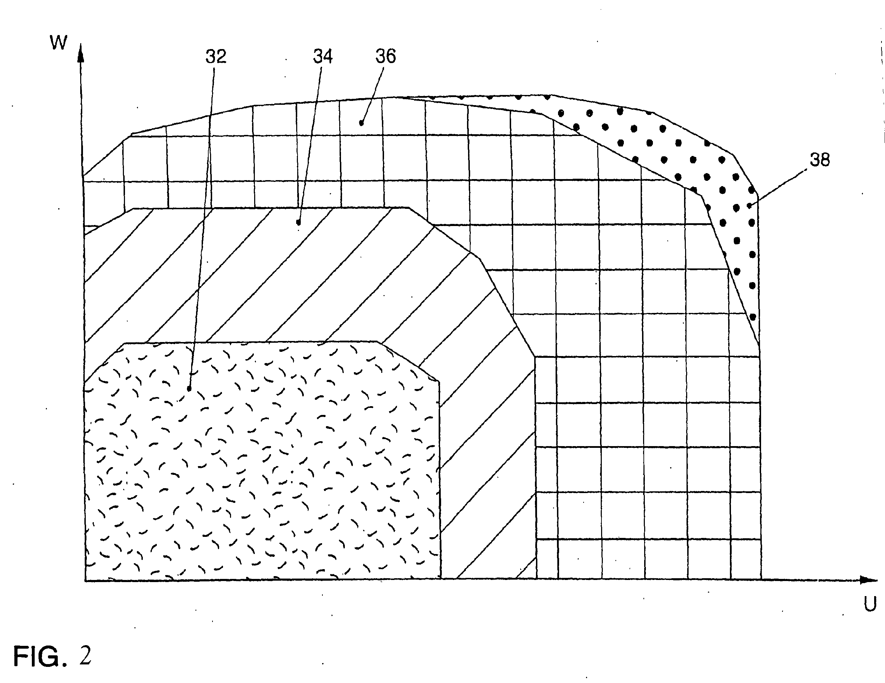

Die Figur 2 zeigt eine Lage der Kenngröße in Abhängigkeit von einer Last W zu einer Drehzahl U der Verbrennungskraftmaschine 14. Wird beispielsweise bei konstanter Last W die Drehzahl U erhöht, führt dies zu einem Kraftstoffmehrverbrauch, wobei infolgedessen der Lambdawert sinkt und die Temperatur des Abgases ansteigt. Die in Abhängigkeit von Last W und Drehzahl U der Verbrennungskraftmaschine 14 möglichen Kenngrößen werden hier in vier beliebig applizierbare Bereiche unterteilt. Dabei ist in einem Bereich 32 die Entschwefelungsnotwendigkeit derart gewählt, daß sie im wesentlichen von dem Verschwefelungsgrad bestimmt wird, das heißt, daß die Entschwefelung bei Erreichen eines vorgebbaren Schwellenwertes für den Verschwefelungsgrad initiiert wird. In einem Bereich 34 dagegen wird neben dem Verschwefelungsgrad auch die Temperatur des NOₓ-Speicherkatalysators 16 zur Beurteilung der Notwendigkeit der Entschwefelung herangezogen. So kann beispielhaft die Entschwefelung beim Erreichen von bereits 70 % des Schwellenwertes und bei einem Vorliegen einer Temperatur von beispielhaft mehr als 400 °C initiiert werden. Unter 100 % des Schwellenwertes wird ein Verschwefelungsgrad verstanden, dessen begleitender NOₓ-Aktivitätseinbruch eben noch die Erfüllung der gesetzlich zugelassenen Schadstoff-Grenzwerte im Typzulassungstest ermöglicht.

Steigt die Temperatur auf über 550 °C, so kann die Entschwefelung bereits bei Vorliegen von nur 50 % des Schwellenwertes als notwendig beurteilt werden (Bereich 36), während im Bereich 38 sowohl Lambdawert als auch die Temperatur derart vorliegen, daß sie unabhängig vom Verschwefelungsgrad bereits eine natürliche Entschwefelung des NOₓ-Speicherkatalysators 16 ermöglichen.

Durch die gezeigte Steuerung des Entschwefelungsprozesses kann einerseits ein Kraftstoffmehrverbrauch infolge eines notwendigen Aufheizens des NOₓ₋Speicherkatalysators 16 auf die Mindesttemperatur verringert werden und andererseits wird durch die Herabsetzung des Schwellenwertes bei höheren Temperaturen eine Entschwefelung früher initiiert, so daß eine geringere Sulfatkorngröße vorliegt. Damit sind auch korrosive Prozesse, beispielsweise Rißbildung, vermindert.

Anstelle der beispielhaft gezeigten, bereichsweisen Beurteilung der Entschwefelungsnotwendigkeit kann auch eine kontinuierliche Beurteilung anhand einer Entscheidungsmatrix, die einen Energiebedarf zur Entschwefelung der Entschwefelungsnotwendigkeit gegenüberstellt, erfolgen. Der Energiebedarf ist abhängig von der NOₓ-Speicherkatalysatortemperatur und dem Verschwefelungsgrad.

## Patentansprüche

1. Verfahren zur Entschwefelung von wenigstens einem in einem Abgaskanal einer Verbrennungskraftmaschine angeordneten NOₓ-Speicherkatalybator, wobei die Entschwefelung in Abhängigkeit eines Verschwefelungsgrades initiiert wird, der aus einem einem Verhältnis der NOₓ-Konzentration stromauf und stromab des NOₓ₋Speicherkatalysators in Abhängigkeit von einer im NOₓ-Speicherkatalysator eingelagerten NOₓ-Masse bestimmt wird, und zur Entschwefelung eine Mindestentschwefelungstemperatur am NOₓ-Speicherkatalysator und ein Arbeitsmodus der Verbrennungskraftmaschine mit Lambda ≤ 1 eingestellt wird sowie zur Erreichung dieses Arbeitsmodus und/oder der Mindesttemperatur eine zumindest temporäre Beeinflussung wenigstens eines Betriebsparameters der Verbrennungskraftmaschine erfolgt, **dadurch gekennzeichnet, daß** die Entschwefelung femer in Abhängigkeit eines aktuellen Lambdawertes und/oder einer aktuellen Temperatur des NOₓ-Speicherkatalysators (16) initiiert wird.

2. Verfahren nach Anspruch 1, **dadurch gekennzeichnet, daß** eine Beurteilung einer Notwendigkeit der Entschwefelung kontinuierlich oder stufenweise anhand des Verschwefelungsgrades und des aktuellen Lambdawertes und/oder anhand des Verschwefelungsgrades und der aktuellen Temperatur des NOₓ-Speicherkatalysators (16) erfolgt.

3. Verfahren nach Anspruch 2, **dadurch gekennzeichnet, daß** ein Schwellenwert für den Verschwefelungsgrad, bei dem eine Entschwefelung initiiert wird, kontinuierlich oder stufenweise in Abhängigkeit des aktuellen Lambdawertes und/oder der aktuellen Temperatur des NOₓ-Speicherkatalysators (16) variiert wird.

4. Verfahren nach Anspruch 3, **dadurch gekennzeichnet, daß** der Schwellenwert für den Verschwefelungsgrad bei steigender Temperatur des NOₓ-Speicherkatalysators (16) sinkt.

## Claims

1. Process for the desulphurization of at least one NOₓ storage catalytic converter arranged in an exhaust pipe of an internal-combustion engine, the desulphurization being initiated as a function of a degree of sulphurization which is determined from a ratio of the NOₓ concentration upstream and downstream of the NOₓ storage catalytic converter as a function of an NOₓ mass incorporated in the NOₓ storage catalytic converter, and, for desulphurization, a minimum desulphurization temperature at the NOₓ storage catalytic converter and an operating mode of the internal-combustion engine with lambda ≤ 1 are set and, to reach this operating mode and/or the minimum temperature, at least one operating parameter of the internal-combustion engine is at least temporarily influenced, **characterized in that** the desulphurization is also initiated as a function of a current lambda value and/or a current temperature of the NOₓ storage catalytic converter (16).

2. Process according to Claim 1, **characterized in that** the need for desulphurization is assessed continuously or in a stepwise manner on the basis of the degree of sulphurization and the current lambda value and/or on the basis of the degree of sulphurization and the current temperature of the NOₓ storage catalytic converter (16).

3. Process according to Claim 2, **characterized in that** a threshold value for the degree of sulphurization at which desulphurization is initiated is varied continuously or in a stepwise manner as a function of the current lambda value and/or the current temperature of the NOₓ storage catalytic converter (16).

4. Process according to Claim 3, **characterized in that** the threshold value for the degree of sulphurization falls as the temperature of the NOₓ storage catalytic converter (16) rises.

## Revendications

1. Procédé de désulfuration d'au moins un catalyseur à accumulation de NOₓ disposé dans un tuyau d'échappement d'un moteur à combustion interne, la désulfuration étant amorcée en fonction d'un degré de sulfuration qui est déterminé à partir d'un rapport de la concentration en NOₓ en amont et en aval du catalyseur à accumulation de NOₓ en fonction d'une masse de NOₓ accumulée dans le catalyseur à accumulation de NOₓ, et, pour la désulfuration, une température de désulfuration minimale au niveau du catalyseur à accumulation de NOₓ étant ajustée, et un mode de travail du moteur à combustion interne avec lambda ≤ 1 étant ajusté, et, pour l'obtention de ce mode de travail et/ou de la température minimale, au moins un paramètre de fonctionnement du moteur à combustion interne étant influencé au moins temporairement, **caractérisé en ce que** la désulfuration est amorcée en outre en fonction d'une valeur lambda actuelle et/ou d'une température actuelle du catalyseur à accumulation de NOₓ (16).

2. Procédé selon la revendication 1, **caractérisé en ce qu'**une analyse de la nécessité de désulfurer est effectuée en continu ou de manière discontinue à l'aide du degré de sulfuration et de la valeur lambda actuelle et/ou à l'aide du degré de sulfuration et de la température actuelle du catalyseur à accumulation de NOₓ (16).

3. Procédé selon la revendication 2, **caractérisé en ce qu'**une valeur seuil pour le degré de sulfuration, à laquelle la désulfuration est amorcée, est modifiée en continu ou de manière discontinue en fonction de la valeur lambda actuelle et/ou de la température actuelle du catalyseur à accumulation de NOₓ (16).

4. Procédé selon la revendication 3, **caractérisé en ce que** la valeur seuil pour le degré de sulfuration diminue pour une augmentation de la température du catalyseur à accumulation de NOₓ (16).
